Europäisches Patentamt

European Patent Office

Office européen des brevets

(11) Numéro de publication: **0 006 798**
**A1**

## (12) DEMANDE DE BREVET EUROPEEN

(21) Numéro de dépôt: 79400396.2

(22) Date de dépôt: 15.06.79

(51) Int. Cl.³: **H 04 L 11/20**

(30) Priorité: 20.06.78 FR 7818407

(43) Date de publication de la demande: 09.01.80
Bulletin 80/1

(84) Etats contractants désignés: CH DE SE

(71) Demandeur: "THOMSON-CSF", 173, boulevard Haussmann, F-75360 Paris Cedex 08 (FR)

(72) Inventeur: **Marguinaud, André, "THOMSON-CSF" - SCPI 173, Bl. Haussmann, F-75360 Paris Cedex 08 (FR)**
Inventeur: **de Couasnon, Tristan, "THOMSON-CSF" - SCPI 173, Bl. Haussmann, F-75360 Paris Cedex 08 (FR)**

(74) Mandataire: **Blaise, Michel et al, "THOMSON-CSF" - SCPI 173, bld Haussmann, F-75360 Paris Cedex 08 (FR)**

(54) **Système de communication numérique à haut débit, en réseau maillé.**

(57) La présente invention concerne les systèmes de communication numérique par paquets de bits à travers des réseaux maillés.

Le message d'adresse de chaque paquet est constitué d'une succession de trains de bits, respectivement caractéristiques de chacun des nœuds de communication traversés, et disposés dans l'ordre de traversée des nœuds dont les dispositifs d'aiguillage ($A_1$) des paquets comportent des moyens de décodage (16) puis de suppression du premier du train de bit reçu, à l'aide d'un interrupteur (12) inséré dans le circuit d'une voie de réception $R_1$, et commandé par un compteur (17) de la longueur de ce train.

Application à la transmission conjointe de signaux téléphoniques et de données.

ACTORUM AG

# SYSTEME DE COMMUNICATION NUMÉRIQUE
# A HAUT DÉBIT, EN RÉSEAU MAILLÉ

La présente invention concerne les systèmes de communication numérique en réseau maillé dans lesquels l'information est transmise par des trains de bits successifs appelés paquets.

De tels systèmes sont connus dans lesquels ces paquets sont aiguillés, à chaque noeud de transmission du réseau, après une reconnaissance préalable du contenu informatique du paquet et en particulier de son champ d'adresse. Chaque paquet est suivi et précédé de motifs de synchronisation, appelés drapeaux dans ce qui suit, qui servent également de remplissage dans les périodes d'absence d'information à transmettre, et entraînent une procédure de conditionnement de l'information bien connue sous le sigle anglo-saxon HDLC (High Level Data Link Control), le traitement de l'information comportant notamment des moyens pour en transformer les configurations qui pourraient se présenter identiques à celles de ces drapeaux ; les systèmes comportent aussi des dispositifs de gestion à chaque noeud de transmission et à chaque point d'extrémité du réseau. Ces dispositifs assurent essentiellement la mise en mémoire des paquets de bits, leur traitement (détection d'erreur, comptabilisation des bits) et leur ordonnancement dans les mémoires en fonction de leur dégré de priorité de transmission. L'organisation de la gestion peut être soit distribuée, les dispositifs de chaque noeud du réseau étant sensiblement identiques et quasi autonomes, soit centralisée, ils dépendent alors d'un organe de gestion général unique, enfin soit hiérarchisée, donnant lieu à une structure pyramidale de ces dispositifs. Le choix du mode de gestion est guidé par le type d'acheminement désiré qui peut être déterministe, c'est-à-dire figé dès le point de départ du paquet, ou adaptatif, c'est-à-dire déterminé, tout au moins partiellement, au cours du cheminement.

Tous ces systèmes présentent en commun de sérieux inconvénients : le dispositif d'analyse du champ d'adresse du paquet comporte d'importants circuits qui grèvent le coût des équipements, nuisent à leur fiabilité, et ont pour conséquence de provoquer un retard de transmission des paquets, à chaque noeud traversé. De plus il est bien établi que la constitution actuelle des drapeaux entraîne, lorsque ceux-ci sont utilisés en grande densité, la création d'une composante continue moyenne qui limite le débit maximal autorisé, ou complique les équipements.

La présente invention a pour objet de pallier ces inconvénients et de permettre une transmission beaucoup plus performante des signaux téléphoniques, en particulieur dans le cas d'un acheminement déterministe.

Selon l'invention, un système de communication numérique pour la transmission de messages par paquets de bits, à travers un réseau maillé, est caractérisé en ce que le message d'adresse de chaque paquet est constitué d'une succession de trains de bits, respectivement caractéristiques de chacun des noeuds de communication traversés, et disposés dans l'ordre de traversée des noeuds dont le dispositif d'aiguillage des paquets comporte des moyens de décodage puis de suppression du premier train de bits reçu.

L'invention sera mieux comprise et d'autres caractéristiques apparaîtront à l'aide de la description ci-après et des dessins s'y rapportant sur lesquels :

- la figure 1 est un schéma de principe général d'un exemple de noeud de transmission d'un système de communication en réseau maillé selon l'art connu ;

- la figure 2 est un schéma de principe, selon l'invention, d'un élément de la figure 1 ;

- la figure 3 est un schéma de principe d'un élément de la figure 2.

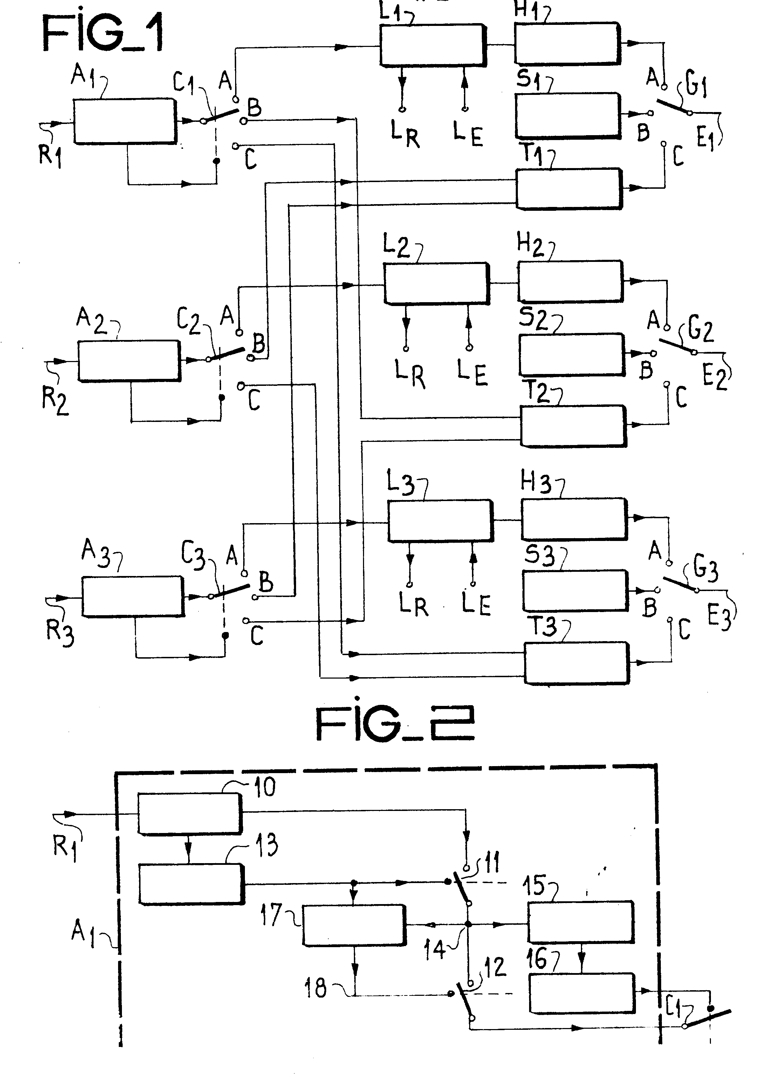

Sur la figure 1, le noeud de transmission représenté est prévu pour 3 voies de réception distinctes, raccordées respectivement aux bornes $R_1$, $R_2$ et $R_3$, et 3 voies d'émission issues respectivement des bornes $E_1$, $E_2$ et $E_3$.

Chacune des bornes $R_1$, $R_2$ et $R_3$ alimente respectivement les commutateurs à 3 positions $C_1$, $C_2$, $C_3$ à travers des dispositifs d'aiguillage correspondants $A_1$, $A_2$, $A_3$ fournissant chacun la tension de commande de positionnement du commutateur avec lequel il est associé.

De même les bornes $E_1$ à $E_3$ sont connectées respectivement à des commutateurs à 3 positions $G_1$ à $G_3$.

Ce noeud de transmission comporte aussi 3 dispositifs de stockage de paquets, $L_1$, $L_2$, $L_3$ destinés à la réception et à l'émission d'informations locales, à travers des accès respectifs $L_R$ et $L_E$. Les entrées de ces trois dispositifs $L_1$ à $L_3$ sont connectées respectivement aux plots A des commutateurs $C_1$ à $C_3$ et leurs sorties aux plots A des commutateurs $G_1$ à $G_3$, à travers des circuits éliminateurs de drapeaux $H_1$ à $H_3$ respectivement insérés en sortie des dispositifs $L_1$ à $L_3$.

Il comporte également 3 générateurs de drapeaux $S_1$ à $S_3$ dont les sorties sont respectivement connectées aux plots B des commutateurs $G_1$ à $G_3$.

Les plots C de ces commutateurs $G_1$ à $G_3$ sont respectivement connectés à la sortie de dispositifs à mémoire $T_1$ à $T_3$ comportant deux entrées chacun. Celles de $T_1$ sont respectivement reliées aux plots B des commutateurs $C_2$ et $C_3$, celles de $T_2$ aux plots B de $C_1$, et C de $C_3$, enfin celles de $T_3$ sont respectivement reliées aux plots C des commutateurs $C_1$ et $C_2$.

Tous ces commutateurs sont représentés sous forme mécanique pour la clarté du dessin mais sont en réalité des commutateurs électroniques.

Il est supposé dans cet exemple que les voies de réception $R_1$ à $R_3$ sont respectivement associées aux voies d'émission $E_1$ à $E_3$ dans une des 3 liaisons bilatérales ainsi constituées.

Ainsi les informations en provenance d'une voie de réception quelconque, par exemple $R_1$ , sont nécessairement destinées soit à l'exploitation locale (dispositif $L_1$) soit à l'une des deux autres liaisons bilatérales, c'est-à-dire aux voies émission $E_2$ ou $E_3$ à travers les dispositifs à mémoire correspondants $T_2$ et $T_3$ , le choix étant assuré par le dispositif d'aiguillage $A_1$ , qui décode l'information correspondante contenue dans chaque paquet de bits lui provenant.

Les commutateurs $G_1$ à $G_3$ sont actionnés par un dispositif de gestion non représenté, qui assure également l'ordonnancement des données dans les mémoires des dispositifs $T_1$ à $T_3$ et $L_1$ à $L_3$ en fonction de leur dégré de priorité. Habituellement, une priorité générale est donnée aux paquets en transit (correspondant au positionnement des commutateurs sur le plot C), sur ceux émis localement. Le positionnement sur le plot B est automatiquement provoqué avant l'émission de chaque paquet à transmettre, qui se trouve inséré entre deux drapeaux, ainsi qu'en l'absence d'information à transmettre afin d'effectuer un remplissage par une suite ininterrompue de drapeaux, chaque drapeau étant constitué d'une suite d'un nombre prédéterminé de bits de même polarité, suivie et précédée d'un bit de signe opposé.

Les circuits $H_1$ à $H_3$ ont pour but de rompre les configurations de groupement de bits d'information qui pourraient correspondre à celles des drapeaux, cela à l'aide d'une introduction de bits supplémentaires selon un code préétabli et reconnaissable à la réception, afin d'y rétablir l'information originelle, manipulation bien définie par la procédure de conditionnement HDLC citée plus haut. Cette manipulation est avant tout nécessaire au point de départ des paquets, c'est-à-dire en sortie des dispositifs $L_1$ à $L_3$ , mais un circuit éliminateur de configuration de drapeau doit également être placé à chaque noeud de transmission, en sortie des dispositifs d'aiguillage A, de manière à être absolument certain que la configuration des drapeaux est extérieure au contenu des paquets.

Tout ce qui vient d'être dit au sujet de la figure 1 concerne l'art connu qui n'a été rappelé que pour mieux comprendre le système de communication numérique selon l'invention dont les caractéristiques originales, concernant notamment l'adressage des paquets et la constitution des drapeaux, seront ci-après exposées à l'aide des figures suivantes :

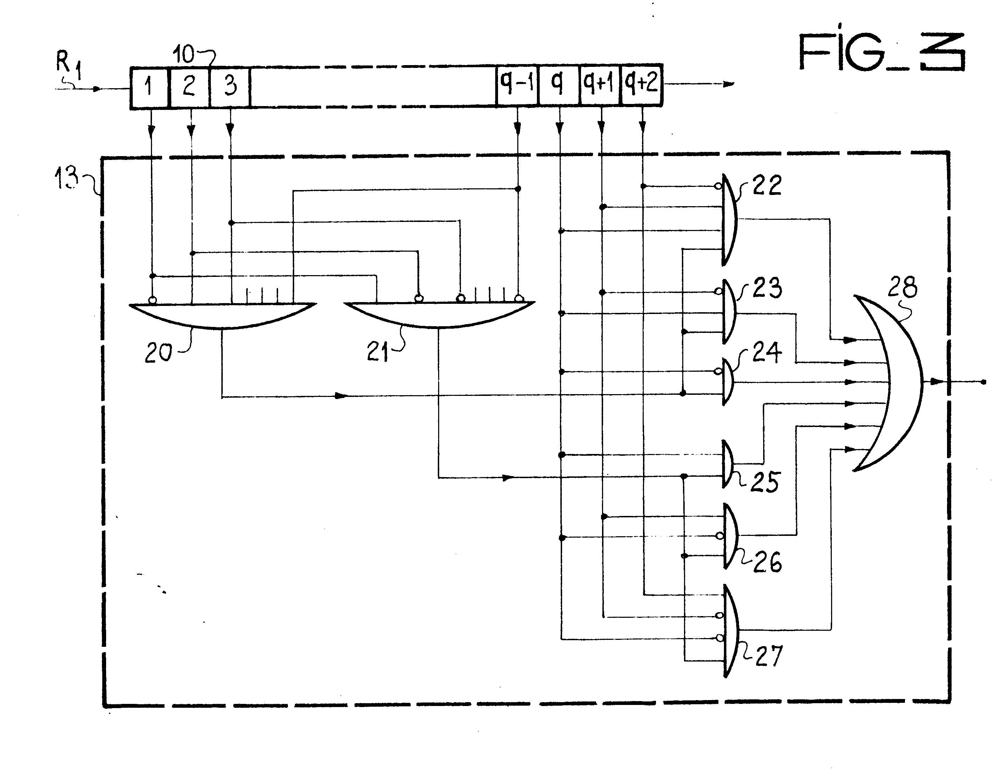

Sur la figure 2, le dispositif d'aiguillage $A_1$ de la figure 1 comporte, de l'arrivée de la voie de réception $R_1$ au commutateur $C_1$ , un registre 10 et deux interrupteurs électroniques 11 et 12 connectés en série. Un décodeur 13 reçoit l'information de l'état des étages du registre 10 et commande le positionnement de l'interrupteur 11 et le préchargement d'un compteur 17 qui avance au rythme du débit binaire présent au point 14 qui alimente également le registre 15 dont l'état de ses étages est décodé par le décodeur 16 qui commande le positionnement du commutateur $C_1$. Enfin le passage par zéro du compteur 17 entraîne une impulsion sur sa borne 18 commandant l'interrupteur 12.

Le bon fonctionnement du dispositif suppose que les bits d'adressage concernant le noeud de communication représenté figure 1, et qui sont au nombre de deux puisque le nombre de directions possibles, 3,est supérieur à 2 et inférieur à 5, soient placés immédiatement derrière le drapeau précédant le paquet à aiguiller.

Selon cette hypothèse, chaque fois que le décodeur 13 détecte un drapeau, il maintient ou déclenche l'ouverture de l'interrupteur 11, suivant que ce drapeau avait ou non un prédécesseur, pendant un temps égal à la durée du dernier drapeau parvenu,en même temps qu'il charge le compteur 17 à -2 , ce qui provoque également l'ouverture de l'interrupteur 12.

Lorsque l'interrupteur 11 se ferme, les deux bits qui suivent concernent, par hypothèse, l'adressage du paquet pour le noeud de communication où il se trouve à cet instant ; leur décodage par le décodeur 16 permet de placer le commutateur $C_1$ sur la position correspondante. Dès ces deux bits écoulés, le compteur 17, par son impulsion de passage à zéro fournie sur la borne 18, ferme l'interrupteur 12 qui permet ainsi la transmission des seuls bits reçus après l'arrivée des 2 bits d'adressage.

Il est supposé dans l'exemple décrit que le type de la gestion mis en oeuvre dans le système correspondant est déterministe c'est-à-dire qu'il est affecté,à chaque paquet, à son point de départ, dans l'adresse, immédiatement derrière le drapeau, plusieurs suites de bits dont chacune d'elles est caractéristique du noeud de transmission traversé, ces suites étant déterminées par le dispositif de gestion et ordonnées dans l'ordre de la traversée des noeuds par le paquet. Le nombre de bits de chaque suite estuniquement fonction du nombre total de voies possibles (y compris la voie locale constituant le point d'aboutissemént du paquet). Si m est ce nombre total de voies, le nombre de bits b de la suite correspondante sera le plus petit entier tel que $2^b$ soit égal ou immédiatement supérieur à m.

Il est clair que de telles dispositions simplifient de manière considérable les équipements relatifs à la reconnaissance du contenu du paquet telle qu'elle est pratiquée dans les systèmes connus, et surtout qu'elles permettent, en conséquence, une beaucoup plus grande rapidité de transmission.

Il est également intéressant de s'affranchir des inconvénients résultant de la composante continue créée par la structure habituelle des drapeaux, ce qui permet d'éliminer les dispositifs brouilleurs-débrouilleurs de données classiques en transmission de données.

Dans le système de communication selon l'invention, les générateurs de drapeaux ($S_1$ à $S_3$ de la figure 1) comportent un dispositif provoquant systématiquement l'inversion de tous les bits d'un drapeau par rapport au précédent.

La mise en oeuvre des circuits correspondants est évidente et n'a pas été représentée sur les dessins. Différentes solutions sont connues, en particulier l'utilisation d'un compteur du nombre de bits des motifs dont la fin du comptage entraîne la remise à zéro de ce compteur en même temps que l'inversion des bits fournis pendant la durée du drapeau suivant.

Une telle disposition a des conséquences sur l'élimination des configurations de drapeaux que peut présenter l'information, et sur la reconnaissance et l'élimination de ces drapeaux.

Dans ce cas de l'élimination des configurations de drapeaux (circuits $H_1$ à $H_3$ de la figure 1), et si les drapeaux utilisés comportent q bits : $0 \underbrace{1111...0}_{q-2}$, que nous écrirons dans ce qui suit sous la forme $0 \ 1^{q-2} \ 0$, il est rappelé que le dispositif HDLC prévoit d'effectuer cette élimination de la manière suivante :

Le débit binaire traverse un registre à q-2 étages ; chaque fois que les q-2 premiers bits d'entrée sont de la forme $0\ 1^{q-3}$, il est ajouté à la suite un 0 avant la transmission des bits suivants.

A la réception, un registre à q-1 étages est prévu pour détecter chaque suite de bits $0\ 1^{q-3}\ 0$ et supprimer dans ce cas le dernier bit 0 qui ne peut être que celui qui a été ajouté à l'émission.

Une telle disposition est transposable pour les drapeaux de constitution $1\ 0^{q-2}\ 1$ par une simple inversion de tous les circuits logiques. Il suffit donc de prévoir à l'émission un registre supplémentaire à q-2 étages, en parallèle avec le précédent. Si les q-2 premiers bits entrée sont de la forme $1\ 0^{q-3}$ il est ajouté à la suite un 1 avant la transmission des bits suivants.

A la réception, un registre supplémentaire à q-1 étages est prévu pour détecter chaque suite de bits $1\ 0^{q-3}\ 1$ et supprimer dans ce cas le dernier bit 1 qui ne peut être que celui ajouté à l'émission.

La figure suivante montre un exemple de réalisation du circuit de reconnaissance de drapeaux correspondant, c'est-à-dire essentiellement un schéma détaillé du décodeur 13 de la figure 2, conçu pour reconnaître les deux types de drapeaux dans le cas d'une variante où il est supposé que ces drapeaux peuvent avoir une longueur variable de 0 à 2 bits supérieure à q .

Sur la figure 3 sont représentés le registre 10 et le décodeur 13 de la figure 2. Le registre 10 reçoit la voie de réception $R_1$ et comporte q+2 étages dont l'état de chacun d'eux est envoyé sur le décodeur 13 qui comporte huit portes ET 20 à 27 et une porte OU 28. La porte 20 comporte une entrée complémentée connectée au premier étage 1 du registre 10 et q-2 autres entrées normales respectivement reliées aux q-2 étages suivants du registre. La porte 21 possède le même nombre d'entrées, identiquement connectées au registre 10, mais de polarité inverse, par rapport à la porte 20.

La sortie de la porte 20 est connectée en parallèle à une première entrée normale de chacune des portes 22 à 24 et celle de la porte 21 à une première entrée normale de chacune des portes 25 à 27.

L'étage q du registre 10 est connecté en parallèle à une deuxième entrée, normale, des portees 22, 23, 25 et à une deuxième entrée complémentée, des portes 24, 26 et 27.

L'étage q+1 du registre 10 est connecté en parallèle, à une troisième entrée, normale, des portes 22 et 26, et à une troisième entrée complémentée, des portes 23 et 27.

L'étage q+2 est connecté, en parallèle, à une quatrième entrée normale de la porte 27 et à une quatrième entrée complémentée de la porte 22.

Enfin les sorties des six portes ET 22 à 27 sont connectées respectivement aux six entrées de la porte OU 28 dont la sortie est celle du décodeur 13, qui commande l'interrupteur 11 et le compteur 17 de la figure 2.

Lorsque les q-1 premiers étages du registre 10 affichent l'état $0\ 1^{q-2}$ , la porte 20 délivre un 1 logique qui parvient en sortie du OU 28, à travers l'une des portes 24, 23 ou 22, si respectivement et simultanément l'étage q affiche 0 ou si les étages q et q+1 affichent 10 ou encore si les étages q, q+1 et q+2 affichent 110. C'est-à-dire que le décodeur fournit un 1 logique pour les suites $0\ 1^{q-2}\ 0$ , $0\ 1^{q-1}\ 0$ ou $0\ 1^{q}\ 0$.

Un même raisonnement montrerait que ce 1 logique est obtenu à travers les portes 20 simultanément avec l'une des portes 25 , 26 ou 27 respectivement pour les suites $1\ 0^{q-2}\ 1$ , $1\ 0^{q-1}\ 1$ et $1\ 0^q\ 1$ .

Les deux couples de drapeaux supplémentaires $0\ 1^{q-1}\ 0/1\ 0^{q-1}\ 1$ et $0\ 1^q\ 0/1\ 0^q\ 1$ exploitables, respectivement, en plus du couple normal, à partir des couples de portes 23-26 et 22-27 , constituent des informations de gestion, par exemple des degrés d'urgence, qui peuvent être transmises ainsi à peu de frais car elles mettent en jeu des modifications fort peu importantes des circuits concernés. Il y a lieu de noter que le système d'élimination des configurations de drapeaux pouvant se présenter dans l'information à transmettre n'est pas affecté par cette introduction de drapeaux allongés, puisqu'il intervient sur les q-2 premiers bits qui sont communs à tous les drapeaux. Il faut toutefois prévoir les commutations nécessaires au niveau des éléments constitutifs des générateurs $S_1$ à $S_3$ de la figure 1.

Il a été pris en exemple un noeud de transmission à trois voies réception et trois voies émission. Mais les dispositifs décrits s'appliquent en fait à un nombre de voies quelconque, qui peut d'ailleurs être différent entre voies émission et réception, étant donné les règles très souples des systèmes de communication par paquets, qui admettent des débits variables d'une voie à l'autre ainsi que des itinéraires différents entre le sens aller et retour d'une transmission bilatérale, ces propriétés n'étant pas affectées par les dispositions décrites qui ont essentiellement pour but d'accélérer la transmission en vue de l'application au trafic téléphonique.

Dans la description, un acheminement déterministe des paquets a été supposé, c'est celui qui semble le plus intéressant pour tirer le meilleur parti des dispositions décrites, mais il peut également être adaptatif, c'est-à-dire que le dispositif de gestion peut définir ou modifier cet acheminement en cours de transfert. Dans ce cas l'adresse complète du paquet n'est pas constituée entièrement à son point de départ, elle est complétée en cours de route, mais chaque paquet quitte toujours un noeud de transmission avec comme premiers bits la suite caractéristique de la direction à prendre dans le noeud suivant, et le dispositif d'aiguillage décrit figure 2 reste intégralement valable.

12

## REVENDICATIONS

1. Système de communication numérique pour la transmission de messages, par paquets de bits, à travers un réseau maillé comportant N noeuds de communication, N étant supérieur à 2, chacun des N noeuds comportant $E_j$ voies émission et $R_j$ voies réception, ($E_j$ et $R_j$ étant supérieurs à 1 avec $j$ = 1, 2 ... N) , un dispositif de gestion,et des moyens d'aiguillage de chacun des paquets, reçus par chacune des $R_j$ voies réception, vers une quelconque de $E_j$-1 voies émission ou sur une voie d'utilisation locale, chacun de ces paquets comportant un message d'adresse précédant un message d'information et chaque paquet en transit ou émis localement étant précédé et suivi de motifs de synchronisation de p bits successifs de même signe suivis et précédés d'un bit de signe contraire à celui de ces p bits, p étant plus grand que 1, chaque paquet émis localement en un point donné quelconque du réseau parvenant au circuit d'utilisation auquel il est destiné à travers un nombre prédéterminé n de ces N noeuds qu'il parcourt successivement en transit, le choix de ces n noeuds étant déterminé par au moins n des N dispositifs de gestion du réseau, le système étant caractérisé en ce que le message d'adresse est constitué d'une succession de n trains de bits, respectivement caractéristiques de chacun de ces n noeuds traversés, et disposés dans l'ordre de traversée de ces n noeuds, le nombre de bits b de chacun de ces n trains étant déterminé de manière à ce que $2^b$ soit égal ou immédiatement supérieur à $E_j$ , et caractérisé en ce que les moyens d'aiguillage comportent sur chacune des $R_j$ voies de réception de chacun des N noeuds des moyens de décodage du premier train de b bits du message d'adresse reçu et des moyens de suppression de ce premier train dans la retransmission du message d'adresse sur la voie désignée par ce premier train.

2. Système de communication selon la revendication 1, caractérisé en ce que les p bits de chaque motif de synchronisation sont de signe contraire par rapport aux p bits du motif de synchronisation qui le précède sur une même voie de transmission.

3. Système de communication selon l'une des revendications 1 et 2, caractérisé en ce que p est égal à s + t , s étant un nombre entier fixe supérieur à 1 et t un nombre entier variable positif.

4. Système de communication selon l'une des revendications 1 à 3, caractérisé en ce que la succession de n trains de bits du message d'adresse de chaque paquet de bits est établie au point d'origine du paquet de bits correspondant, par le dispositif de gestion de ce point d'origine.

FIG_1

FIG_2

0006798

FIG_3

# RAPPORT DE RECHERCHE EUROPEENNE

**Office européen des brevets**

0006798

Numéro de la demande

EP 79 40 0096

## DOCUMENTS CONSIDERES COMME PERTINENTS

| Catégorie | Citation du document avec indication, en cas de besoin, des parties pertinentes | Revendication concernee |
|---|---|---|
| X | <u>FR - A - 2 309 088</u> (HASLER)<br><br>* Page 4, ligne 12 - page 7, ligne 34; figures 1 et 2 *<br><br>-- | 1,4 |
| | <u>FR - A - 2 242 829</u> (LABORATOIRE CENTRAL DE TELECOMMUNICATIONS)<br><br>* Page 8, ligne 25 - page 12, ligne 13; figures 1-3 *<br><br>-- | 1,4 |
| A | DATAMATION, mars 1976, vol. 22, no. 3,<br>Barrington<br>SANDERS: "Compatibility or Chaos in Communications", pages 50-55.<br><br>* Page 54, passage "Link-control header", figure 2 *<br><br>---- | 1,3 |

**CLASSEMENT DE LA DEMANDE (Int. Cl.²)**

H 04 L 11/20

**DOMAINES TECHNIQUES RECHERCHES (Int. Cl.²)**

H 04 L 11/20

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-09-1979 | |

OEB Form 1503.1  06.78